## Europäisches Patentamt

## European Patent Office

## Office européen des brevets

(11) Veröffentlichungsnummer: **0 146 727**

**B1**

(12) **EUROPÄISCHE PATENTSCHRIFT**

(45) Veröffentlichungstag der Patentschrift:
18.03.87

(21) Anmeldenummer: 84113025.5

(22) Anmeldetag: 29.10.84

(51) Int. Cl.⁴: **H 02 M 7/515**

(54) **Verfahren zum Erreichen des Leerlaufzustandes einer mittels eines Thyristor-Wechselrichters gespeisten Asynchronmaschine.**

(30) Priorität: 09.11.83 DE 3340573

(43) Veröffentlichungstag der Anmeldung:
03.07.85 Patentblatt 85/27

(45) Bekanntmachung des Hinweises auf die Patenterteilung:
18.03.87 Patentblatt 87/12

(84) Benannte Vertragsstaaten:
AT CH DE FR GB LI SE

(56) Entgegenhaltungen:
DE-A-2 952 324
US-A-4 118 770

(73) Patentinhaber: Siemens Aktiengesellschaft Berlin und München, Wittelsbacherplatz 2, D-8000 München 2 (DE)

(72) Erfinder: Waidmann, Wilhelm, Kunigundenstrasse 2, D-8520 Erlangen (DE)
Erfinder: Urbanke, Christian, Dr., Fröbelstrasse 25, D-8520 Erlangen (DE)

EP 0 146 727 B1

## Beschreibung

Die Erfindung betrifft ein Verfahren zum Erreichen des Leerlaufzustandes einer mittels eines Thyristor-Wechselrichters gespeisten Asynchronmaschine.

Elektrische Antriebe, insbesondere in Bahnen, enthalten häufig eine Drehstrom-Asynchronmaschine, die über einen Wechselrichter mit Phasenfolge-Löschung an einen Gleichstrom-Eingangskreis angeschlossen sind, in den von außen mittels eines Gleichstrom-Stellgliedes (z.B. Gleichstromstellers) ein Gleichstrom veränderlicher Amplitude eingespeist wird. Um hierbei die Asynchronmaschine im Leerlauf zu betreiben, braucht lediglich der Gleichstromsteller gesperrt zu werden, während die Thyristoren des Wechselrichters synchron im Takt der Asynchronmaschine angesteuert werden. Der Maschinenstrom kommutiert dabei unverändert zyklisch auf die einzelnen Ventile des Wechselrichters und wird über entsprechende Freilaufdioden des Gleichstrom-Eingangskreises geleitet. Die Maschine bleibt bei diesem strombehafteten Leerlaufbetrieb stets erregt.

Die bei der Phasenfolge-Löschung auftretenden Kommutierungszeiten sind von der Dimensionierung der Kommutierungskondensatoren des Wechselrichters abhängig und beschränken die möglichen Drehzahlen dieses strombehafteten Leerlaufbetriebes. Zur besseren Ausnutzung des Leistungsteils kann es vorteilhaft sein, große Kommutierungskondensatoren für den Phasenfolge-Wechselrichter zu verwenden. Dadurch werden die Kommutierungsverzugszeiten unter Umständen derart verlängert, daß ein strombehafteter Leerlaufbetrieb bei hohen Drehzahlen nicht mehr möglich ist.

Der Erfindung liegt die Aufgabe zugrunde, ein anderes Verfahren zum Erreichen des Leerlaufzustandes einer derartigen Asynchronmaschine zu schaffen, das diese Beschränkungen hinsichtlich der Größe der Kommutierungskondensatoren und der möglichen Drehzahlen nicht aufweist.

Aus der EP-A- 0 062 348 ist es speziell zum Stillsetzen eines Pulswechselrichters bereits bekannt, den Kommutierungstakt zu sperren und somit die Maschine zu entregen.

Ferner ist es aus der DE-A- 2 952 324 speziell zum Inbetriebnehmen eines Stromrichters in Brückenschaltung mit Phasenfolgelöschung bereits bekannt, die zur Aufnahme der Kommutierung nötigen Kommutierungskondensatoren mittels einer Hilfsspannung aufzuladen.

Die der Erfindung zugrunde liegende Aufgabe wird gelöst durch ein Verfahren mit den Merkmalen des Anspruchs 1. Vorteilhafte Weiterbildungen des Verfahrens sind in den Unteransprüchen gekennzeichnet.

Anhand einer Figur und eines Ausführungsbeispiels wird die Erfindung näher erläutert.

Mit ASM ist in der Figur eine mehrphasige Asynchronmaschine bezeichnet, deren Anschlüsse u, v, w mit der positiven Klemme 1 und der negativen Klemme 2 über entsprechende Thyristoren 1u, 1v, 1w bzw. 2u, 2v und 2w angeschlossen sind, wobei die für die Phasenfolge-Löschung erforderlichen Kommutierungskondensatoren mit 1uv, 1vw, 1uw, 2uv, 2vw und 2uw bezeichnet sind und mit den Thyristoren und den benötigten Wechselrichterdioden D in der angegebenen Weise zusammengeschaltet sind.

Im normalen motorischen Betrieb der Asynchronmaschine ASM wird der Gleichspannungs-Eingangskreis des -Wechselrichters über eine Eingangsinduktivität 3 mit einem Eingangsgleichstrom gespeist, der über einen Gleichstromsteller 4 geregelt ist, wobei eine Freilaufdiode 5 im Gleichstromkreis einen Freilaufkreis bei gesperrtem Steller 4 bildet. Mittels eines Fahr/Brems-Schalters 6 kann die Stromeinspeisung in den Gleichstrom-Eingangskreis unterbrochen werden, so daß an sich der Motorstrom der Asynchronmaschine bei durchgeschaltetem Steller 4 über einen mittels der Freilaufdiode 7 geschlossenen Freilaufkreis weiterfließen kann, sofern eine mit der synchronen Frequenz der Asynchronmaschine gesteuerte Kommutierung des Stromes auf die Wechselrichterthyristoren gewährleistet ist. Die synchrone Maschinenfrequenz kann dabei z.B. über eine (nicht dargestellte) Tachomaschine bereitgestellt werden. Soll vom motorischen Betrieb auf Bremsbetrieb übergegangen werden, wobei der Leerlaufzustand ebenfalls durchfahren werden muß, so ist es möglich, in den Gleichstromkreis über entsprechende Schalter z.B. einen Bremswiderstand einzuschalten und den Bremsstrom über den Steller 4 zu steuern. Es ist aber auch der Übergang zu einem Nutzbremsbetrieb möglich.

Sind nun die Kommutierungskondensatoren groß bemessen, so kann es bei hohen Drehzahlen auftreten, daß innerhalb der Zeit, in der ein Thyristor stromleitend angesteuert wird, der Maschinenstrom nicht mehr ausreicht, um den entsprechenden Kommutierungskondensator umzuladen und eine sichere Kommutierung zu gewährleisten.

Gemäß der Erfindung wird nun dadurch in den Leerlaufzustand übergegangen bzw. der Leerlaufzustand durchfahren, daß die Kommutierung des Wechselrichters gesperrt wird, d.h. der Takt, in dem jeweils der folgende Thyristor angesteuert und damit der zuletzt stromführende Thyristor gelöscht wird, wird unterbrochen. Damit bleiben die zuletzt gezündeten Thyristoren leitend, bis sie beim natürlichen Nulldurchgang des Stromes von selbst erlöschen. Mit Erlöschen dieser Thyristoren ist somit der Maschinenstromkreis unterbrochen und die Maschine entregt.

Vorteilhaft kann diese Entregung der Maschine stets über die gleichen vorbestimmten Thyristoren des Wechselrichters vorgenommen werden, d.h. z.B., daß zum Erreichen des Leerlaufzustandes stets ein letzter Zündimpuls auf die selben Thyristoren 1w und 2u gegeben wird, so daß sich die Maschine stets über diese Thyristoren entregt. Bei der Entregung der Maschine kann z.B. der Schalter 6 geöffnet und der Steller 4 durchgesteuert oder umgekehrt der Steller 4 gesperrt und der Schalter 6 geschlossen sein.

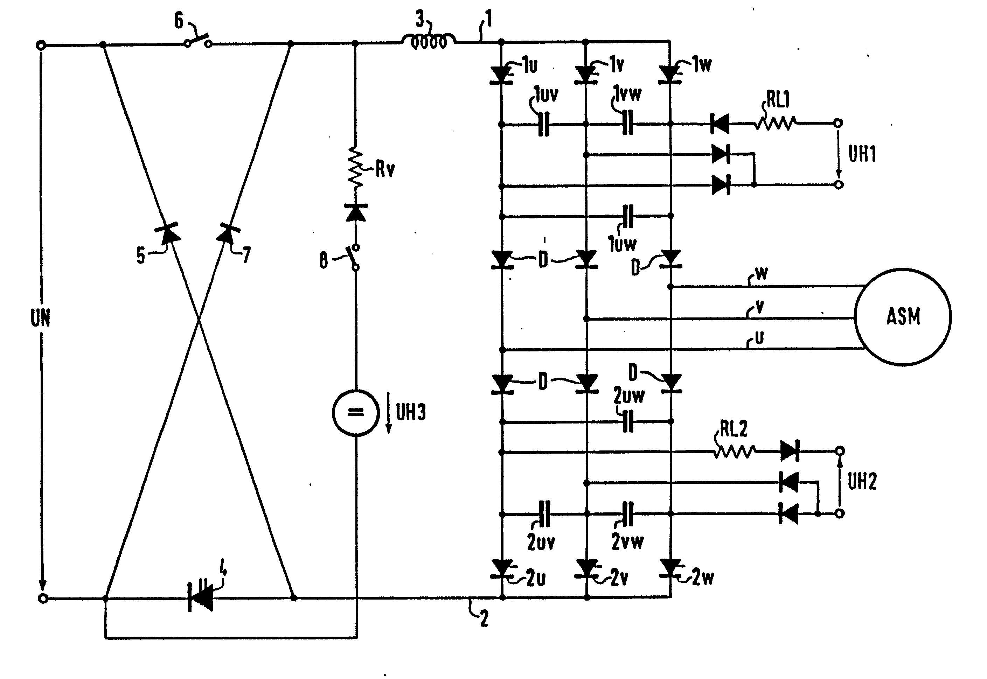

Gleichzeitig hiermit oder nach Beendigung der Entregung werden die für eine Wiederaufnahme der Kommutierung des Wechselrichters benötigten Kommutierungskondensatoren, also z.B. die Kondensatoren 1vw, 1uw, 2uv und 2uw mittels einer Hilfsspannung aufgeladen. Hierzu sind in der Figur 2 Hilfsspannungsquellen UH1 und UH2 gezeigt, die über einen entsprechenden Ladewiderstand RL1 bzw. RL2 und nachgeschaltete Dioden an die Belegungen dieser Kondensatoren angeschlossen sind. Vorteilhaft werden stets die gleichen Kondensatoren aufgeladen, die Wiederaufnahme der Kommutierung des Wechselrichters erfolgt dann stets im gleichen Punkt des Kommutierungszyklusses des Wechselrichters.

Mit dem Aufladen der Kondensatoren wird somit elektrische Energie in den Wechselrichtereingang gespeist, die wegen der gesperrten Kommutierung in den Kondensatoren gespeichert wird. Diese gespeicherte elektrische Energie kann nun dazu verwendet werden, um bei einer anschließenden Wiederaufnahme der Kommutierung einen Strom über die Wicklungen der Asynchronmaschine zu treiben, der zur Erregung der Maschine ausreicht. Daher wird nach Entregung der Maschine die Kommutierung des Wechselrichters mit der synchronen Frequenz der Asynchronmaschine wieder freigegeben.

Die für diese Wiedererregung erforderliche Energiemenge wird umso größer, je kleiner die Drehzahl ist. Eine höhere Energie ist dabei nur durch eine hohe Spannung an den Kondensatoren zu erreichen. Vorteilhaft wird aber in den Gleichstromeingangskreis des Wechselrichters bei Freigabe der Kommutierung ein Vorerregungsgleichstrom eingespeist. Hierzu ist eine weitere Hilfsspannungsquelle UH3 vorgesehen, die über einen Schalter 8 diesen Vorerregungsgleichstrom gleichzeitig mit der Wiederaufnahme der Kommutierung in den Wechselrichter einspeist, bis die Asynchronmaschine soweit erregt ist, daß der Maschinenstrom für die weitere ordnungsgemäße Kommutierung des Wechselrichters ausreicht und der Schalter 8 wieder geöffnet werden kann. Die Höhe der Vorladespannung der Kommutierungskondensatoren kann dann auf die Vorladespannung begrenzt bleiben, die für das Anfahren des Antriebs ohnehin vorgesehen ist.

Ist die Maschine ausreichend erregt und hat der Maschinenstrom den für die Kommutierung nötigen Betrag erreicht, so erregt sich nunmehr die Maschine bis auf die volle Höhe des Maschinenstromes von selbst und kann in diesem selbsterregten Zustand weiter betrieben werden, wobei entweder der Leerlaufzustand beibehalten oder auf den Bremsbetrieb übergegangen werden kann.

Das Ausführungsbeispiel geht vom motorischen Normalbetrieb der Asynchronmaschine aus. Letztlich ist es für die Erfindung unwesentlich, ob von einem motorischen oder generatorischen Normalbetrieb ausgegangen wird oder ob die Maschine z.B. zunächst in einem strombehafteten Leerlaufbetrieb betrieben ist, bei dem (z.B. bei einer Talfahrt eines von der Maschine angetriebenen Fahrzeuges) eine anwachsende Drehzahl einen strombehafteten Betrieb des Wechselrichters erschwert. Dies betrifft vielmehr ebenso nur den Betrieb des Gleichstrom-Stellgliedes, wie auch der Zustand, mit dem der selbsterregte Betrieb der Maschine aufgenommen wird.

**Patentansprüche**

1. Verfahren zum Erreichen des Leerlaufzustandes einer mittels eines Thyristor-Wechselrichters gespeisten Asynchronmaschine, wobei durch Sperrung des Kommutierungstaktes des Wechselrichters die Maschine (ASM) entregt wird, die für die Wiederaufnahme der Kommutierung nötigen Kommutierungskondensatoren (1vw, 1uw, 2uv, 2uw) mittels einer Hilfsspannung (UH1, UH2) aufgeladen werden und nach Entregung der Maschine die Kommutierung des Wechselrichters mit der synchronen Frequenz der Asynchronmaschine freigegeben wird.

2. Verfahren nach Anspruch 1, dadurch gekennzeichnet, daß in den Gleichstrom-Eingangskreis des Wechselrichters bei Freigabe der Kommutierung ein Vorerregungsgleichstrom eingespeist wird (Vorerregungs-Hilfsspannung UH3).

3. Verfahren nach Anspruch 1 oder 2, dadurch gekennzeichnet, daß stets die gleichen Kommutierungskondensatoren (1vw, 1uw, 2uv, 2uw) mittels der Hilfsspannung (UH1, UH2) aufgeladen werden.

4. Verfahren nach einem der Ansprüche 1 bis 3, dadurch gekennzeichnet, daß die Entregung der Maschine stets über die gleichen vorbestimmten Thyristoren (1w, 2u) des Wechselrichters vorgenommen wird.

**Claims**

1. A process for achieving the no-load state with an induction motor fed by a thyristor inverter, wherein the motor (ASM) is deenergised by blocking the commutation clock pulse of the inverter, wherein the commutation capacitors (1vw, 1uw, 2uv, 2uw) required for the resumption of commutation action are loaded by an auxiliary voltage (UH1, UH2) and following de-energisation of the motor the inverter commutation action is released by the synchronous frequency of the induction motor.

2. A process as claimed in Claim 1, characterised in that when the commutation action is released a pre-excitation direct current (pre-excitation auxiliary voltage UH3) is fed into the d.c. input circuit of the inverter.

3. A process as claimed in Claim 1 or 2, characterised in that at all times the same commutation capacitors (1vw, 1uw, 2uv, 2uw) are loaded by the auxiliary voltage (UH1, UH2).

4. A process as claimed in one of Claims 1 to 3, characterised in that de-energisation of the motor is always effected by the same predetermined thyristors (1w, 2u) of the inverter.

**Revendications**

1. Procédé pour atteindre l'état de marche à vide d'une machine asynchrone alimentée par un onduleur à thyristors, selon lequel la machine (ASM) est désexcitée par blocage de l'impulsion de cadence de commutation de l'onduleur, les condensateurs de commutation (1vw, 1uw, 2uv, 2uw), qui sont nécessaires pour le rétablissement de la commutation, sont chargés au moyen d'une tension auxiliaire (UH1, UH2) et, après désexcitation de la machine, la commutation de l'onduleur avec la fréquence synchrone de la machine asynchrone est libérée.

2. Procédé selon la revendication 1, caractérisé en ce qu'un courant continu de pré-excitation est introduit dans le circuit d'entrée à courant continu de l'onduleur lors de la libération de la commutation (tension auxiliaire de pré-excitation UH3).

3. Procédé suivant la revendication 1 ou 2, caractérisé par le fait que toujours les mêmes condensateurs de commutation (1vw, 1uw, 2uv, 2uw) sont chargés au moyen de la tension auxiliaire (UH1, UH2).

4. Procédé suivant l'une des revendications 1 à 3, caractérisé par le fait que la désexcitation de la machine est réalisée en permanence par l'intermédiaire des mêmes thyristors prédéterminés (1w, 2u) de l'onduleur.